# EUROPÄISCHE PATENTSCHRIFT

(11) **EP 1 116 702 B1**
(45) Veröffentlichungstag und Bekanntmachung des Hinweises auf die Patenterteilung: **26.03.2003**
(21) Anmeldenummer: 00890378.3
(22) Anmeldetag: 18.12.2000
(51) Int. Cl.: C04B 7/52, B02C 19/06

(54) **Verfahren und Vorrichtung zum Zerkleinern von Heissklinker**
Process and apparatus for communiting hot klinker
Procédé et dispositif pour broyer de clinker très chaud

(30) Priorität: 12.01.2000 AT 392000
(43) Veröffentlichungstag der Anmeldung: 18.07.2001
(73) Patentinhaber: MSManagement + Eng. A. Pestalozzi Inhaber: Andreas Pestalozzi, 7250 Klosters (CH)
(72) Erfinder: Edlinger, Alfred Dipl.Ing., 6780 Bartholomäberg (AT)
(74) Vertreter: Haffner, Thomas M., Dr.

(56) Entgegenhaltungen:
- WO-A-99/17882
- AT-U- 3 108
- DE-A- 4 304 458
- US-A- 3 734 413
- US-A- 5 992 773

## Beschreibung

Die Erfindung bezieht sich auf ein Verfahren zum Zerkleinern von heißem Klinker sowie auf eine Vorrichtung zur Durchführung dieses Verfahrens.

Heißer Klinker sowie ggf. heiße in fester Form anfallende Schlacken werden in der Regel vor einer nachfolgenden Zerkleinerung gekühlt. Bei der Verwendung von Klinkerkühlern kann der Klinkerkühler mit kalter Luft betrieben werden, wobei die Kühlluft erwärmt wird und in der Folge mit einem mittleren Temperaturniveau vorliegt. Die Kühlgeschwindigkeit ist bei derartigen Einrichtungen vergleichsweise langsam, wodurch beim Abkühlen ein teilweise unerwünschtes Kristallwachstum nicht verhindert werden kann. Die mit mittleren Temperaturen anfallende Abluft derartiger Kühlaggregate kann zwar als Sekundärluft eingesetzt werden, womit die fühlbare Wärme zumindest teilweise genutzt werden kann. Andererseits ist aber insbesondere bei entsprechend unerwünschtem Kristallwachstum der energetische Aufwand für ein nachfolgendes Zerkleinern bzw. Mahlen relativ hoch, da die beim Abkühlen kompaktierten Festkörper nur mit höherem Aufwand zerkleinert werden können. Während bei einer langsamen Kühlung große Kristalle entstehen und in der Regel eine niedrigere Frühfestigkeit des aus Klinker hergestellten Zementes beobachtet wird, gelingt es bei entsprechend rascher Abkühlung Hochtemperaturkristallmodifikationen einzufrieren, was insbesondere bei sogenanntem Weißzementklinker, d.h. eisenoxidfreiem Klinker, von besonderer Bedeutung ist. Insbesondere bei Weißzementklinker ist somit ein rasches Kühlen von ausschlaggebender Bedeutung, um die gewünschten Produkteigenschaften zu erzielen.

Die Erfindung zielt nun darauf ab, ein Verfahren der eingangs genannten Art zu schaffen, mit welchem zum einen eine höhere Abkühlgeschwindigkeit und zum anderen gleichzeitig eine effiziente Zerkleinerung von Heißklinker erzielt wird. Zur Lösung dieser Aufgabe besteht das erfindungsgemäße Verfahren im wesentlichen darin, daß der Heißklinker mit Temperaturen über 1000° C in eine Wirbelschicht eingebracht wird und mit Druckwasser beaufschlagt wird, daß aus der Wirbelschicht Feinstaub und Dampf ausgetragen wird und daß der Dampf nach einer Entstaubung kondensiert wird und als Druckwasser in die Wirbelschicht eingebracht wird. Dadurch, daß erfindungsgemäß in einer Wirbelschicht gearbeitet wird, welche durch Eindüsen von Druckwasser ausgebildet und aufrechterhalten wird, verdampft mit Rücksicht auf die relativ hohen Temperaturen der heißen Klinker das Druckwasser explosionsartig. Der in der Wirbelschicht entstehende Dampfimpuls schleudert die Klinkerteilchen nach oben und führt zu einer intensiven Kollision zwischen einzelnen Klinkerpartikeln und damit zu einer effizienten Prall-Zerkleinerung bei gleichzeitiger Abkühlung des Heißklinker. Da Heißklinker noch weitestgehend porös sind, gelingt es auf diese Weise, eine wirkungsvolle und intensive Zerkleinerung zu erzielen, wobei die entsprechend zerkleinerten Teilchen über einen Sichter oder einen Heißzyklon gemeinsam mit Dampf ausgetragen werden können. Dadurch, daß nun der aus der Wirbelschicht gemeinsam mit dem Dampf abgezogene Klinkerstaub bzw. Feinstaub zunächst über einen Entstauber, wie beispielsweise einen Filter oder Heißzyklon, geführt wird, gelingt es, die Festteilchen aus der Dampfphase abzutrennen bevor die Dampfphase kondensiert, sodaß auch eine unerwünschte Hydratation vermieden werden kann und tatsächlich absolut trockene, zerkleinerte und gekühlte Teilchen ausgetragen werden, welche sich nunmehr auf einem Temperaturniveau von beispielsweise etwa 250° befinden, sodaß eine nennenswerte Veränderung der Kristallstrukturen insbesondere ein nennenswertes Kristallwachstum nicht mehr beobachtet werden kann.

Dadurch, daß nun der gemeinsam mit dem Feinstaub abgezogene Dampf nach der Abtrennung des Feinstaubes kondensiert wird, wird das für das Eindüsen in die Wirbelschicht erforderliche Druckwasser rückgebildet, sodaß das für die Zerkleinerung und die Abkühlung verwendete Druckwasser weitestgehend im Kreislauf geführt werden kann. Die Kondensation kann hiebei bevorzugt unter Aufwärmung von Luft, welche als Klinkerofensekundärluft eingesetzt werden kann, erfolgen, sodaß die fühlbare sowie auch weitestgehend die latente (Verdampfungswärme) Wärme des Dampfes innerhalb des Prozesses rückgewonnen werden kann und die aus der Druckdifferenz zwischen der Dampfphase und der Kondensatphase gewonnene Energie wiederum als Zerkleinerungsenergie durch explosionsartige Verdampfung zur Verfügung steht. Insgesamt gelingt es auf diese Weise ein besonders wirtschaftliches Verfahren zu schaffen, bei welchem das für die Zerkleinerung eingesetzte Druckwasser weitestgehend im Kreislauf geführt werden kann und gleichzeitig Abwärme sinnvoll für vorangehende Prozesse, wie beispielsweise im Klinkerofenbetrieb verwendet werden kann.

Eine weitere Verbesserung der Mahlwirkung läßt sich dadurch erzielen, daß in die Wirbelschicht zusätzlich Mahlkörper, insbesondere Mahlkugeln aus Stahl und/oder Keramik, eingebracht werden.

Die erfindungsgemäße Vorrichtung zur Durchführung dieses Verfahrens kann konstruktiv besonders einfach gestaltet sein und ist im wesentlichen gekennzeichnet durch einen Wirbelschichtreaktor, in dessen Unterteil Druckwasserdüsen angeordnet sind und oberhalb der Düsenebene eine Schleuse für die Aufgabe von heißen Schlacken oder Klinker, ein Sichter und eine Abzugsleitung für Dampf-Staubgemische angeordnet ist, wobei in die Abzugsleitung eine Entstaubungseinrichtung und ein Dampfkondensator eingeschaltet ist, dessen Kondensat einer Druckwasserpumpe zugeführt ist. Die Druckwasserdüsen können hiebei in einer im Wirbelschichtreaktor angeordneten Verteilerplatte bzw. Bodenplatte angeordnet sein, sodaß die Wirbelschicht über den gesamten lichten Querschnitt des Reaktors ausgebildet werden. Dadurch, daß heißer Klinker über eine Schleuse aufgebracht wird, kann im Inneren des Reaktors ein entsprechender Überdruck aufrechterhalten werden, sodaß das Kondensat auch auf höherem Temperaturniveau anfallen kann, wobei der Dampf in Gleichgewicht mit Klinkerpartikel immer überhitzt ist.

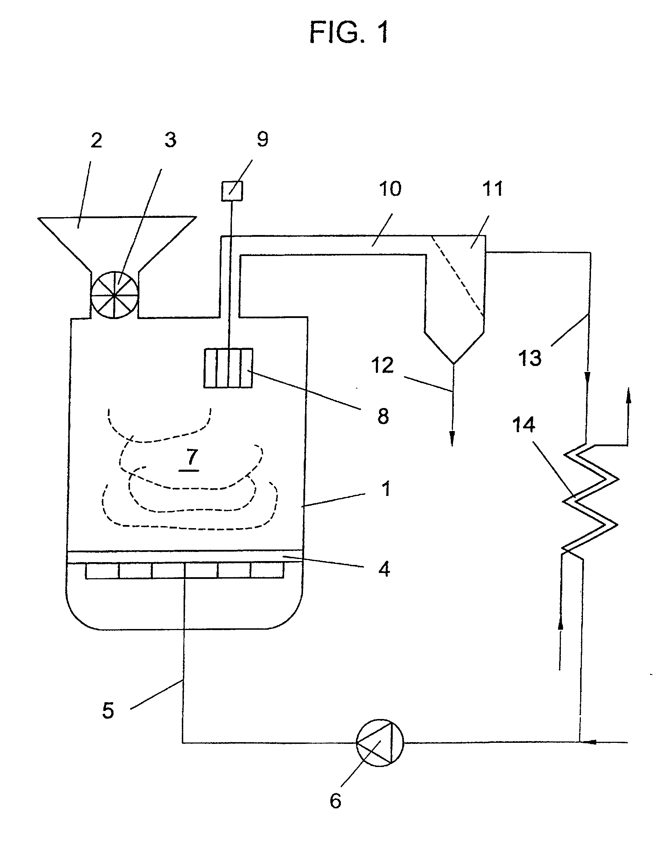

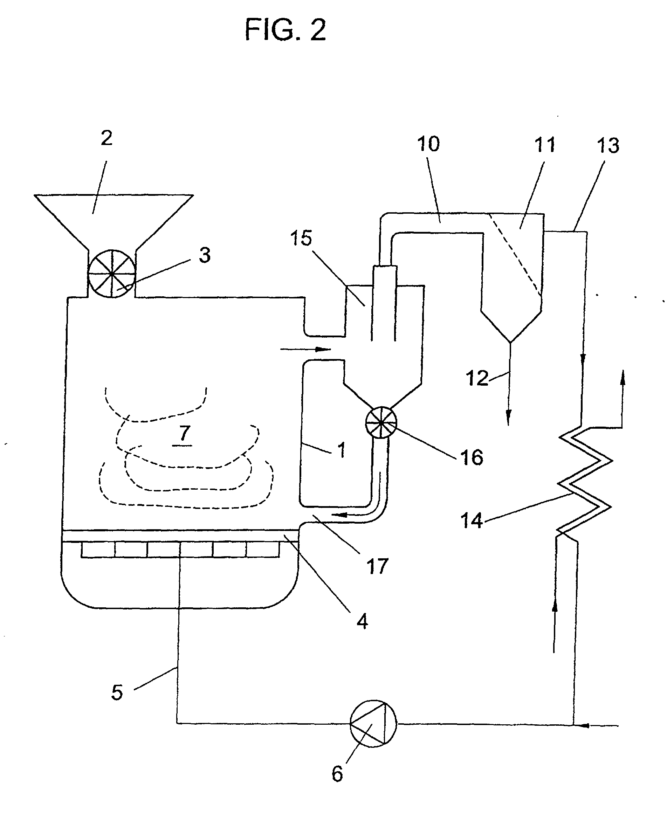

Die Erfindung wird nachfolgend anhand einer in der Zeichnung dargestellten für die Durchführung des erfindungsgemäßen Verfahrens geeigneten Vorrichtung näher erläutert. In der Zeichnung zeigt Fig. 1 eine erste Ausführungsform der erfindungsgemäßen Vorrichtung und Fig. 2 eine schematische Darstellung einer weiteren Ausführungsform einer erfindungsgemäßen Vorrichtung.

In Fig. 1 ist ein Wirbelschichtreaktor 1 ersichtlich, an welchem eine Aufgabeschurre 2 für Heißklinker und eine Zellradschleuse 3 angeschlossen ist. Der Wirbelschichtreaktor 1 wird über eine Düsenbodenplatte 4 mit Druckwasser aus einer Leitung 5 beaufschlagt, wobei die entsprechende Druckwasserpumpe mit 6 bezeichnet ist. Im Inneren des Wirbelschichtreaktors bildet sich eine Wirbelschicht 7 aus, in welcher Druckwasser explosionsartig verdampft. Der durch den Dampfimpuls nach oben geschleuderte Kinker prallt gegen herabsinkende andere Klinkerpartikel oder Mahlkörper, wodurch es zu einer intensiven Prall-Zerkleinerung kommt. Der entsprechende Feinanteil wird über einen Sichter 8 abgezogen, dessen Antriebsmotor mit 9 bezeichnet ist. Über die Abzugsleitung 10 gelangt Feinstaub und Dampf in einen Filter 11, aus welchem der Feinstaub über die Leitung 12 abgezogen wird. Der verbleibende Dampf gelangt über die Leitung 13 in einen Kühler 14, in welcher die Kühlung bzw. Kondensation des Dampfes im Gegenstrom zu vorzuwärmender Luft erfolgt. Das Kondensat kann in der Folge über die Druckwasserpumpe 6 wiederum über die Leitung 5 in die Wirbelschicht 7 eingepresst werden und dort wiederum explosionsartig verdampfen.

In Fig. 2 ist eine abgewandelte Ausbildung ersichtlich, bei welcher das aus dem Wirbelschichtreaktor 1 abgezogene Material zunächst in einen Zyklon 15 gelangt, aus welchem Feingut über die Leitung 10 wiederum dem Filter 11 zugeführt wird. Grobgut aus dem Zyklon wird über eine Schleuse 16 oberhalb der Düseebene über die Leitung 17 rückgeführt, wodurch eine extern zirkulierende Mahlwirbelschicht gebildet wird. Die Aufgabe des Heißklinkers kann wiederum über die Schurre 2 oder aber auch unmittelbar über die Schleuse 16 erfolgen. Heißklinker fällt üblicherweise mit Temperaturen um 1450° C an und kann unmittelbar mit dieser Temperatur eingesetzt werden, sodaß gesondere Kühlschritte vor der Zerkleinerung entfallen und die intensive Kühlung gleichzeitig mit der Zerkleinerung stattfindet. Druckwasser kann bei der erfindungsgemäßen Einrichtung bei relativ geringem Druck eingesetzt werden, wobei mit Drucken zwischen 4 und 10 bar das Auslangen gefunden wird.

## Patentansprüche

1. Verfahren zum Zerkleinern von heißen Klinker, **dadurch gekennzeichnet, daß** Heißklinker mit Temperaturen über 1000° C in eine Wirbelschicht eingebracht wird und mit Druckwasser beaufschlagt wird, daß aus der Wirbelschicht Feinstaub und Dampf ausgetragen wird und daß der Dampf nach einer Entstaubung kondensiert wird und als Druckwasser in die Wirbelschicht eingebracht wird.

2. Verfahren nach Anspruch 1, **dadurch gekennzeichnet, daß** die Dampfkondensation unter Aufwärmung der Klinkerofen-Sekundärluft vorgenommen wird.

3. Verfahren nach Anspruch 1 oder 2, **dadurch gekennzeichnet, daß** in die Wirbelschicht zusätzlich Mahlkörper, insbesondere Mahlkugeln aus Stahl und/oder Keramik, eingebracht werden.

4. Vorrichtung zur Durchführung des Verfahrens nach einem der Ansprüche 1 bis 3 **gekennzeichnet durch** einen Wirbelschichtreaktor (1), in dessen Unterteil Druckwasserdüsen angeordnet sind und oberhalb der Düsenebene eine Schleuse (2) für die Aufgabe von heißen Schlacken oder Klinker, ein Sichter (8) und eine Abzugsleitung (10) für Dampf-Staubgemische angeordnet ist, wobei in die Abzugsleitung (10) eine Entstaubungseinrichtung (11) und ein Dampfkondensator (14) eingeschaltet ist, dessen Kondensat einer Druckwasserpumpe (6) zugeführt ist.

5. Vorrichtung nach einem der Ansprüche 1 bis 4, **dadurch gekennzeichnet, daß** die Druckwasserdüsen in einer Bodenplatte (4) über den Querschnitt des Wirbelschichtreaktors (1) verteilt angeordnet sind.

## Claims

1. A method for disintegrating hot clinker, **characterized in that** hot clinker at temperatures of above 1000°C is introduced into a fluidized bed and powered with pressure water, that fine dust and vapour are extracted from the fluidized bed, and that the vapour is condensed after dedusting and introduced into the fluidized bed as pressure water.

2. A method according to claim 1, **characterized in that** the vapour condensation is effected while heating the clinker furnace secondary air.

3. A method according to claim 1 or 2, **characterized in that** grinding bodies and, in particular, grinding balls of steel and/or ceramic material are additionally introduced into the fluidized bed.

4. A device for carrying out the method according to any one of claims 1 to 3, **characterized by** a fluidized bed reactor (1) in whose lower part pressure-water nozzles are arranged and a sluice (2) for the charging of hot slag or clinker, a screening means (8) and a discharge duct (10) for vapour - dust mixtures are arranged above the plane of the nozzles, wherein a dedusting means (11) and a vapour condenser (14) are provided in the discharge duct (10), the condensate of which vapour condenser is supplied to a pressure-water pump (6).

5. A device according to any one of claims 1 to 4, **characterized in that** the pressure-water nozzles are arranged in a bottom plate (4) so as to be distributed over the cross section of the fluidized bed reactor (1).

## Revendications

1. Procédé de fragmentation de clinker chaud, **caractérisé en ce que** du clinker chaud, à des températures supérieures à 1000°C, est introduit dans une couche turbulente et soumis à de l'eau sous pression, **en ce que** des poussières fines et de la vapeur sont extraites de la couche turbulente et **en ce que** la vapeur est condensée après un dépoussiérage et introduite en tant qu'eau sous pression dans la couche turbulente.

2. Procédé selon la revendication 1, **caractérisé en ce que** la condensation de la vapeur s'effectue avec chauffage de l'air secondaire du four à clinker.

3. Procédé selon la revendication 1 ou 2, **caractérisé en ce que** dans la couche turbulente on introduit en outre des corps de broyage, en particulier des boulets de broyage en acier et/ou céramique.

4. Dispositif pour la mise en oeuvre du procédé selon l'une des revendications 1 à 3, **caractérisé par** un réacteur à couche turbulente (1) dans la partie inférieure duquel sont disposées des buses à eau sous pression et au-dessus du plan des buses est disposé un sas (2) pour le chargement de scories chaudes ou de clinker, un filtre (8) et une conduite d'extraction (10) étant prévus pour le mélange de vapeur et de poussières, un dispositif de dépoussiérage (11) ainsi qu'un condensateur de vapeur (14), dont le condensat est envoyé à une pompe d'eau sous pression, étant montés dans la conduite d'extraction (10).

5. Dispositif selon l'une des revendications 1 à 4, **caractérisé en ce que** les buses à eau sous pression sont disposées dans une plaque de fond (4), réparties sur la section transversale du réacteur à couche turbulente (1).
